Europäisches Patentamt

European Patent Office

Office européen des brevets

(19)

(11) Publication number: **0 250 651**
**B1**

(12) **EUROPEAN PATENT SPECIFICATION**

(45) Date of publication of the patent specification:
03.01.90

(51) Int. Cl.⁴: **B65G 51/02**

(21) Application number: 86201115.2

(22) Date of filing: 25.06.86

(54) Air conveyor for plastic film.

(43) Date of publication of application:
07.01.88 Bulletin 88/1

(45) Publication of the grant of the patent:
03.01.90 Bulletin 90/1

(84) Designated Contracting States:
BE DE FR GB IT NL

(56) References cited:
DD-A- 113 504
DE-A- 2 507 833
DE-A- 3 009 410
DE-A- 3 020 245

(73) Proprietor: OERLIKON MOTCH CORPORATION,
Hayward California 94540(US)

(72) Inventor: Danler, Richard, 14985 256 Avenue Southeast,
Issaquah Washington 98027(US)

(74) Representative: van der Beek, George Frans, Ir. et al,
Nederlandsch Octrooibureau Scheveningseweg 82 P.O.
Box 29720, NL-2502 LS 's-Gravenhage(NL)

ACTORUM AG

## Description

The present invention relates to an air conveyor for conveying plastic film web, of predetermined width and indeterminate length comprising an entrance section having a width at least as wide as the film being conveyed.

Such a conveyor is known from DD-A 113 504 whereby a web moves without reduction in lateral dimension through the nip of rolls. Pneumatic chambers are provided to assist in conveying the web. Gas is issuing from each pneumatic chamber.

The present invention is directed to an air conveyor for gathering waste film and conveying the film in web form to a convenient disposal unit such as a scrap grinding unit. A principal function of the conveyor is to gather the film in manageable form for delivery to the scrap grinder.

In a typical manufacturing operation for fabricating heavy plastic film such as 177.8 µm to 381 µm Mylar, the plastic is extruded and drawn in web form through the fabricating equipment to wind-up rolls. During the course of manufacture, large quantities of scrap are generated which must be disposed of, in start-up operations, substandard film is usually formed as the forming equipment is brought to normal operating condition. In addition, during periods of normal manufacturing operation, the film web may break occasionally causing a massive pile-up of waste film on the plant floor.

Compending application U.S. Serial No. 794 193 filed May 5, 1977, is directed to an air conveyor for disposing of relatively thin guage film which accumulates during a manufacturing mishap. In such patent application the film is moved and conveyed through the action of the conveyor air jets. However, stiffer or heavier film material of from 177.8 µm to 381 µm cannot be gathered or converged into convenient form for introduction into a scrap grinder. Heavy film behaves as does sheet metal, plywood, or carboard in that they fold only in one dimension at a time and are not susceptible to forming compound bends without crinkling or creasing. Because heavy film creases or crinkles, it cannot be handled by an air conveyor of the type disclosed in the compending patent application.

At present therefore, thick scrap film is handled manually. Substandard waste film generated ruing start-up operations is pulled aside and accumulated until normal film forming machine operating is achieved. Then the waste film is disposed of manually. Should the film web rupture during machine operation, the film forming equipment must be shut down while the scrap film is gathered and removed.

The present invention is directed to an air conveyor for removing waste or scrap heavy film material such as Mylar between approximately 177.8 µm to 381 µm. An air conveyor according to the present invention takes waste film in web form and reduces its effective width by a factor of up to 7 to 1 by forming a transverse generally uniform sinusoidal corrugation or pleat in the film. In this pleated form the waste film may be introduced into any suitable scrap disposal unit such as a scrap grinder or chipper for reprocessing.

The air conveyor according to the invention includes an entrance section which comprises a deck plate having slots oriented to issue air jets for conveying the film along the entrance section, a pleater section located downstream of said entrance section, said pleater section comprising air conveyor sections positioned over and under said film web, said over and under sections each having W-shaped deck surfaces in nested confronting relationship to define a gap therebetween having a generally sinusoidal profile extending transversely of the film, said W-shaped deck surfaces developing in depth and convergence in the conveying direction, each of said W-shaped deck surfaces having slots therein for issuing conveying air jets in the direction of conveyance, means for supplying air under pressure to both the entrance and pleater sections of the air conveyor whereby the air conveyor reduces the width of the film by imparting a generally sinusoidal shaped thereto.

Thus, the web enters the pleating section with the leading edge being in a generally straight line configuration and leaves with the leading edge in a generally sinusoidal curve. As a result of the transition in shape, the waste film web is reduced in width and is in a more convenient form for introduction into a film disposal unit.

The over result then is a conveyor pleater section which receives a generally flat waste film web and reforms the web to have a generally sinusoidal transverse curve so that as the web moves it is reduced in overall width.

It is to be understood that the deck plate surfaces of the trough and ridge portions of the pleating section are incised with slots for issuing conveying air jets for moving the film material.

The conveyor may be provided with one or more exit conveyor sections for preserving the sinusoidal form of the film as it moves to the waste disposal unit. The exit conveyor sections serve also to continue converging the pleated film after it leaves the film pleating section. Preferably the exit conveyor has confronting air conveyor sections positioned along opposite sides of the pleated web and in converging relation to each other along the path of conveyance.

After leaving the exit conveyor section, the film is introduced into a scrap grinder or other disposal unit.

An object of the invention is to provide a conveyor capable of use in controlling and conveying waste film to a disposal unit.

Another object of the invention is to provide an air conveyor as part of a film-forming installation to enable removal of waste film generated during film forming operations.

Another object of the invention is to provide an air conveyor for removal of heavy guage film such as Mylar.

A further object of the invention is to provide an air conveyor which transforms generally flat heavy film into a convenient form for disposal by imposing a generally sinusoidal transverse curvature to the film as it is conveyed to a disposal unit.

Other and further objects of the invention will become apparent with an understanding of the description and drawing of the invention, or will occur to one skilled in the art upon employment of the invention in practice.

A preferred embodiment of the invention has been chosen for purposes of illustrating and describing the principles of the invention and is shown in the accompanying drawing in which:

Figure 1 is a schematic side elevation view, partly in section, showing an overall factory layout of an air conveyor for heavy film according to the invention.

Figure 2 is a plan view of the air conveyor portion of figure 1 with the top pleater unit removed.

Figure 3 is a fragmentary perspective view of an air slot incised into the air conveyor deck plate surface for issuing conveying air jets.

Figure 4 is a section view taken along line 4-4 of figure 2 showing the incline of a trough portion of the lower pleater unit of the air conveyor.

Figures 5 through 8 are section views taken a long lines 5-5 through 8-8 of Figure 2 respectively, illustrating the surface contour of the lower pleater unit of the air conveyor.

Figure 9 is a plan view of the deck plate surface of the top pleater unit.

Figure 10 through 13 are section views taken along lines 10-10 through 13-13 of figure 9 to illustrate the surface contour of the top pleater unit deck surface.

Figure 14 is a section view taken along line 14-14 of Figure 2 to illustrate the generally sinusoidal shape imparted to heavy film by the air conveyor.

Figures 15 and 16 are perspective views of the lower and upper portions respectively of the pleater section of the air conveyor.

Figure 17 is a section view taken along line 17-17 of Figure 1 to show the generally sinusoidal contour assumed by heavy film as it enters the film chipper.

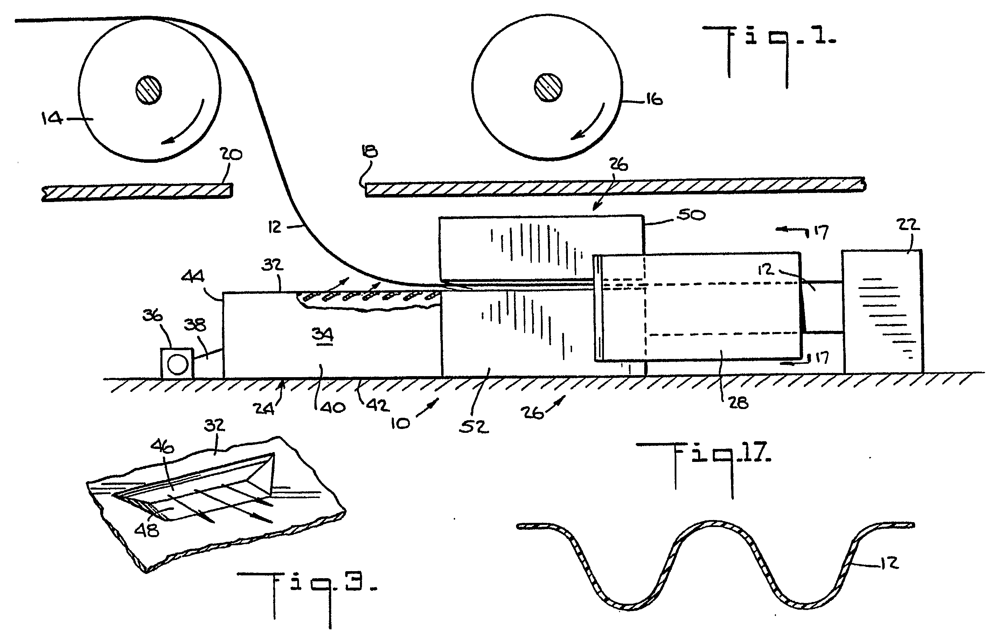

Referring now to the drawing and in particular to Figure 1, a heavy film air conveyor 10 of the invention is intended primarily for use in a factory for producing heavy film 12 such as Mylar of between 7 and 15 mils in thickness which is formed and drawn over a support roll 14 to a windup roll 16. As noted above, large amounts of waste film are generated during startup operations, and occasionally during a production run when the film web ruptures. In practice, air conveyor 10 is positioned below a suitable opening 18 in the factory floor 20 in order to capture and convey waste film to a film chipper or grinder 22. The air conveyor may be oriented horizontally as shown, or if desired it may be oriented vertically or at an incline.

The air conveyor includes an entrance section 24 preferably at least as wide as the film being conveyed. The entrance section captures the leading edge portion of the film, carries it through a pleater section 26, through converging side panels 28, 30, and into the film chipper 22. As the film is moved it changes shape from a flat sheet to the generally sinusoidal transverse form shown in Figure 17.

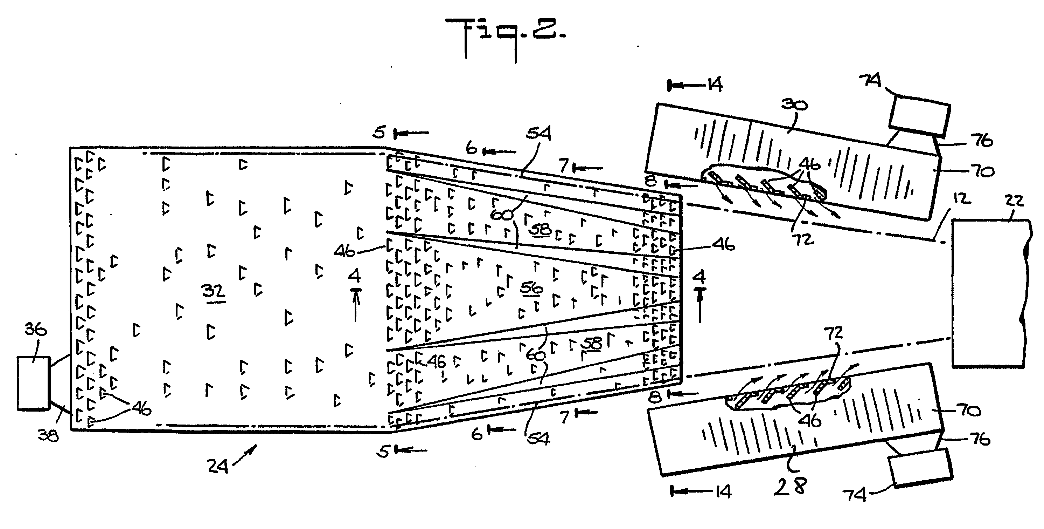

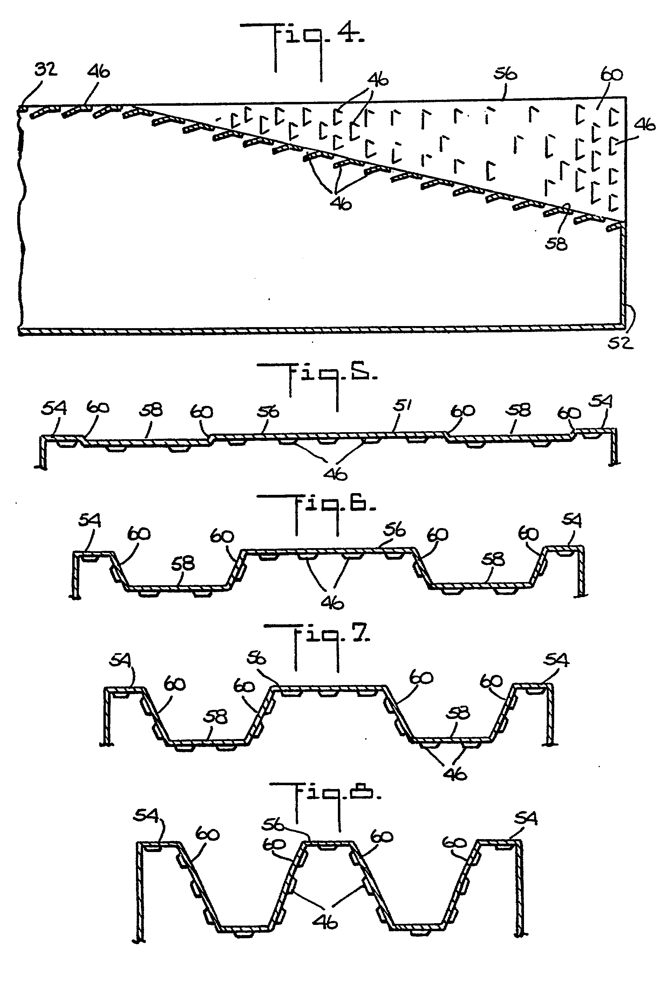

The conveyor entrance section comprises an air conveyor having a perforated deck plate 32, a plenum chamber 34, and an air fan or blower 36 for supplying pressurized air through a transition duct 38 to the plenum chamber. The plenum chamber is fully enclosed and defined by side 40, bottom 42, and end walls 44, and deck plate 32. The deck plate defines the conveying surface of the conveyor and is perforated with air slots 46 which emit jets of conveying air indicated by arrows. Each air jet has a major conveying component along the surface of the deck plate. The air slots 46 are incised into the deck plate as shown in Figure 3 by cutting the deck plate 32 and depressing the down-stream portion 48 of the deck plate to define air jet slot 46.

At the outset it should be understood that the deck plate surfaces of the entrance section 24, the pleater section 26, and the side panels 28, 30 all have surfaces perforated with air slots of the configuration shown in Figure 3.

Waste film 12 generated during film forming operations moves through floor opening 18 and is captured by the entrance section 24 of the air conveyor. According to the invention, the film is converged through the pleater section 26 and side panels 28, 30 of the conveyor and is reduced in width for feeding into the film chipper 22.

The pleated section 26 of the air conveyor preferably comprises upper 50 and lower 52 portions which cooperate to transform the film from a relatively flat condition in which the leading edge approximates a straight line (in edge view) to a generally sinusoidal condition in which the film leading edge takes on the wave form shown in Figure 17. This change in form reduces the film width and facilitates introduction of the film into the film chipper 22.

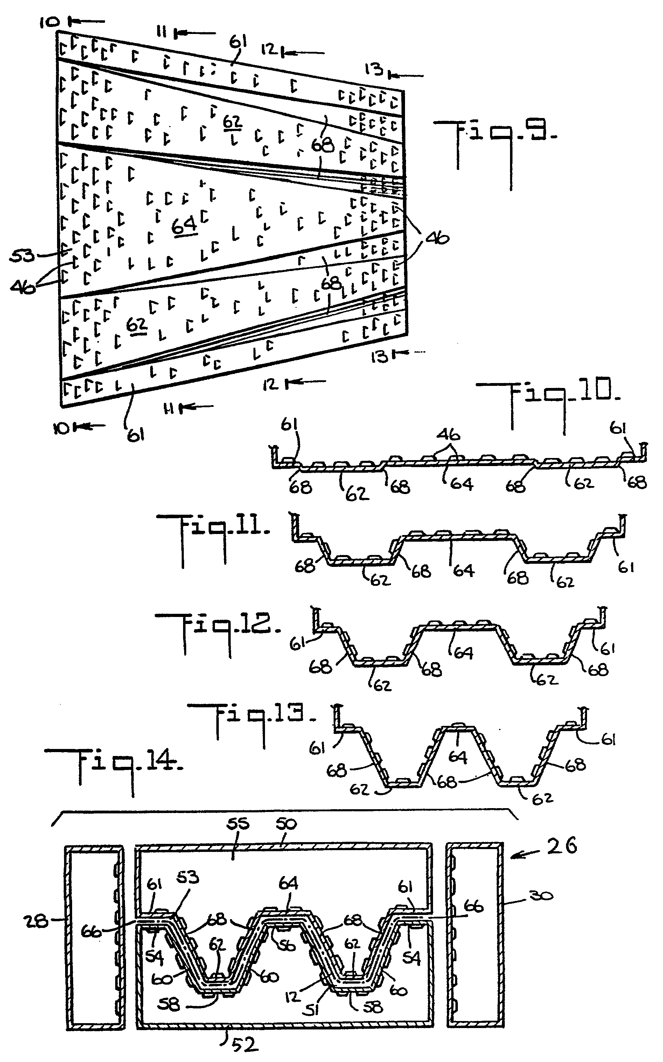

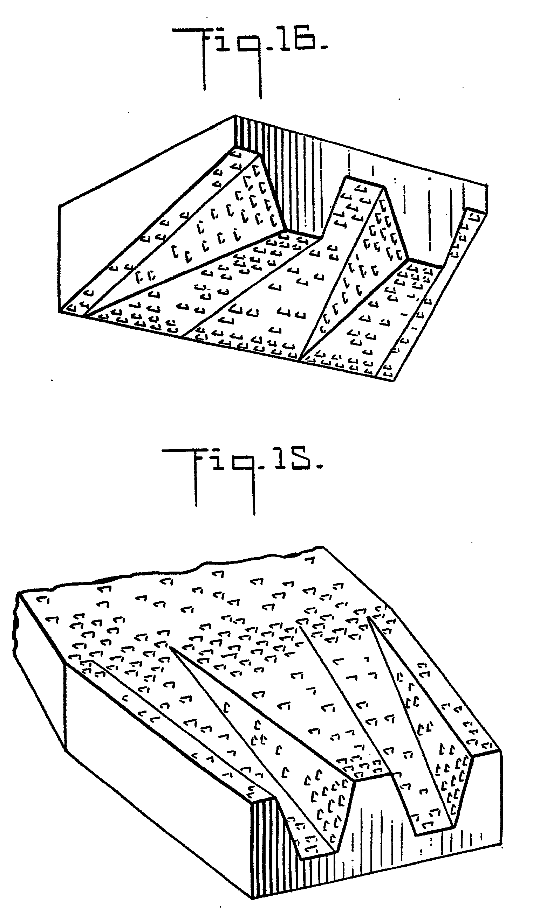

The lower unit 52 of the pleater has a generally "W"-shaped cross-section with the "W"-shape developing in depth and convergence in the conveying direction in manner illustrated in Figures 5-8. That is to say, the lower pleater unit 52 includes marginal ridges 54 following the angle of convergence of the pleated section and a central ridge 56 converging in the direction of conveyance. Each of the marginal and central ridges are coplanar with the deck plate surface of the entrance section of the conveyor. The marginal and central ridges are separated by intervening troughs 58 which also converge in the conveying direction. In addition, each trough is inclined in the conveying direction as shown in Figure 4.

Adjacent ridges 54, 56 and troughs 58 are separated by wedge-shaped gussets 60 which become wider in the direction of conveyance so as to connect contiguous ridge and trough surfaces.

The surfaces of ridge, gusset and trough define an active conveying surface 51 perforated with air slots 46 for issuing air jets in the direction of conveyance. If desired, the marginal ridges may have air jets oriented to issue air jets in the direction of convergence. The overall effect of air jets in the pleater section is to move the film in the conveying direction so that it assumes a "W"-shape or generally sinusoidal transverse shape for convenient entry into the film chipper.

As best shown in Figures 1 and 9 through 16, the pleater section includes an upper unit 50 having an active air conveyor surface 53 formed with ridges 62 and trough 64 arranged to nest with the active surface of the lower pleater unit in forming a "W"-shaped gap 66 (Figure 14) for pleating the film 12. The upper unit includes a plenum chamber 55 supplied with pressurized air in the same manner as the lower unit 52. As shown in Figures 9-13, the upper active surface includes marginal ridges 61, converging ridges 62 and trough 64 which converge in the manner illustrated in Figures 10-13 and 16. Gussets 68 join adjacent ridge and trough surface of the upper active surface 53. The entire active surface 53 is incised with air slots 46 substantially in the same manner as the active surface of the lower unit.

The upper 50 and lower 52 units of the pleater are shown in Figures 15 and 16. It will appear that the pleater units 50 and 52 converge in the direction of conveyance and have active ridge and trough surface for pleating the film. The entire deck plate surfaces of the upper and lower pleater units are perforated with air slots 46 for issuing air jets to convey and converge the film in a generally sinusoidal curve.

As is preferred, a pair of side panels 28, 30 lie in confronting converging relation along the line of conveyance between the pleater 26 and the chipper 22 to furhter squeeze the film 12. Each side panel includes a plenum chamber 70 and a perforated deck plate 72. Each plenum chamber is supplied with pressurized air by means of an air blower 74 through a transition duct 76. Each deck plate is incised with air slots 46 as shown in Figure 3 for issuing air jets along the deck plate surface. The side panels continue squeezing or converging the sinusoidal shape film after it emerges from the pleater section and as it approaches the chipper.

It is to be understood that the heavy film air conveyor of the invention may be oriented horizontally, vertically or at any intermediate incline. The air conveyor may be used with or without the upper pleater unit.

In one use of the invention, 14 mil (355.6 μm) film was converged by a ratio of approximately 5 to 1 omitting the upper pleater unit and with 2" W.G. (50.8 mm WG) air pressure in the entrance and pleater sections and with 3" W.G. (76.3 mm WG) in the side panels.

In another use including the upper pleater unit with a gap of 6 inches (152.4 mm) betwen e pleater units, a convergence ratio of 7 to 1 was obtained for 14 mil (355.6 μm) film using the same plenum air pressures as the earlier example.

In each case the air velocity issuing from the air jets is much higher than film speed so that the air conveyor exerts sufficient pull on the film to avoid film jamming the conveyor during use.

## Claims

1. An air conveyor for conveying plastic film web (12) or predetermined width and indeterminate length comprising an entrance section (24) having a width at least as wide as the film being conveyed, said entrance section (24) comprising a deck plate (32) having slots (46) oriented to issue air jets for conveying the film (12) along the entrance section, a pleater section (26) located downstream of said entrance section (24), said pleater section (26) comprising air conveyor sections (50, 52) positioned over and under said film web, said over and under sections each having W-shaped deck surfaces (51, 53) in nested confronting relationship to define a gap (66) therebetween having a generally sinusoidal profile extending transversely of the film, said W-shaped deck surfaces developing in depth and convergence in the conveying direction, each of said W-shaped deck surfaces having slots (46) therein for issuing conveying air jets in the direction of conveyance, means (36) for supplying air under pressure to both the entrance and pleater sections of the air conveyor whereby the air conveyor reduces the width of the film by imparting a generally sinusoidal shaped thereto.

2. An air conveyor as defined in claim 1, in which each of said W-shaped deck surfaces comprises at least two troughs (58) separated by a ridge member (56) and further in which the ridge members of one pleated deck surface lie along the trough portion of the other pleater deck section thereby to define the generally sinusoidal profile of said gap.

3. An air conveyor as defined in claim 1, which further includes confronting air conveyor sections (28, 30) positioned on opposite sides of the film for guiding, conveying and converging the film as it leaves the pleater section.

4. An air conveyor as defined in claim 3 in which the film is reduced in width by a factor of 7:1 between entrance and exit sections of the conveyor.

5. An air conveyor as defined in claim 3 in combination with a grinder (22) for receiving the film as it leaves the conveyor.

## Patentansprüche

1. Luftförderer zum Fördern einer Kunststofffolienbahn (12) mit vorbestimmter Breite und unbestimmter Länge, der ein Eintrittsteil (24) aufweist, das eine Breite hat, die wenigstens so breit wie die zu fördernde Folie ist, wobei das Eintrittsteil (24) eine Tragplatte (32), die Schlitze (46) hat, die derart ausgelegt sind, daß sie Luftstrahlen zum Fördern der Folie (12) längs des Eintrittsteils ausgeben, ein Faltenlegteil (26), das stromab des Eintrittsteils (24) angeordnet ist, wobei das Faltenlegteil (26) Luftförderteile (50, 52) aufweist, die über und unter der Folienbahn liegen, wobei die über und unter dieser liegenden Teile jeweils W-förmige Tragflächen (51, 53) in ineinandergeschachtelter gegenüberliegender Anordnung haben, um dazwischen einen Spalt (66) zu bilden, der ein im allgemeinen sinusförmiges Profil hat und in Querrichtung zur Folie verläuft, wobei die W-förmigen Tragflächen in der Tiefe zunehmen und in Förderrichtung konvergierend verlaufen und jede W-förmige Tragfläche Schlitze (46) darin hat, mittels welchen Luftstrahlen zur Förderung in Förderrichtung ausgegeben werden, und eine Einrichtung (36) zur Zuführung von unter Druck stehender Luft sowohl zu dem Eintrittsteil als auch zu dem Faltenlegteil des Luftförderers aufweist, wobei der Luftförderer die Breite der Folie dadurch vermindert, daß ihr eine im allgemeinen sinusförmige Gestalt verliehen wird.

2. Luftförderer nach Anspruch 1, bei dem jede W-förmige Tragfläche wenigstens zwei Mulden (58) aufweist, die durch ein Kammteil (56) getrennt sind, und bei dem ferner die Kammteile einer gefalteten Deckfläche längs des Muldenteils des anderen Falttragteils liegt, wodurch das im allgemeinen sinusförmige Profil des Spalts definiert wird.

3. Luftförderer nach Anspruch 1, der ferner gegenüberliegende Luftförderteile (28, 30) umfaßt, die auf gegenüberliegenden Seiten der Folie zur Führung, Förderung und zum konvergierenden Zusammenführen der Folie angeordnet sind, wenn diese das Faltenlegteil verläßt.

4. Luftförderer nach Anspruch 3, bei dem die Folie in der Breite um einen Faktor von 7:1 zwischen dem Eintrittsteil und dem Austrittsteil des Förderers reduziert wird.

5. Luftförderer nach Anspruch 3 in Verbindung mit einer Zerkleinerungseinrichtung (22) zur Aufnahme der Folie, wenn diese den Förderer verläßt.

**Revendications**

1. Dispositif de transport à air pour bande de film de matière plastique (12), de largeur prédéterminée et de longueur indéterminée, comportant une section d'entrée (24) de largeur au moins égale à celle du film à transporter, comprenant une plaque de planches (32) présentant des fenêtres (46) orientées pour faire sortir des jets d'air destinés à transporter le film (12) le long de la section d'entrée; une section d'ondulation (26) située en aval de ladite section d'entrée (24), comprenant des sections de transport à air (50, 52) placés au-dessus et au-dessous de ladite bande de film, chacune de ces sections de transport ayant des surfaces de plancher ou toit (51, 53) en forme de W, qui se font face en position imbriquée pour définir entre elles un intervalle (66) qui a un profil d'ensemble sinusoïdal et s'étend perpendiculairement au film, lesdites surfaces de plancher ou toit en forme de W augmentant de profondeur et de convergence dans la direction de transport, chacune de ces surfaces de plancher ou toit en forme de W présentant des fentes (46) destinées à faire sortir des jets d'air sous pression dans la direction de transport; des moyens (36) pour fournir de l'air sous pression à la fois à la section d'entrée et à la section d'ondulation du dispositif de transport à air, si bien que celui-ci réduit la largeur du film en lui imposant une forme d'ensemble sinusoïdale.

2. Dispositif selon la revendication 1, dans lequel chacune des surfaces de plancher ou toit en forme de W comprend au moins deux gouttières (58) séparées par une nervure (56), et dans lequel, en outre, les nervures d'une surface de plancher ou toit d'ondulation se trouve le long de la partie en gouttière de l'autre section de plancher ou toit d'ondulation, de façon à définir le profil de forme générale sinusoïdale dudit intervalle.

3. Dispositif selon la revendication 1, comprenant en outre des sections (28, 30) de transporteur à air, placées sur les côtés opposés du film pour guider, transporter et faire converger ledit film quand il quitte la section d'ondulation.

4. Dispositif selon la revendication 3, dans lequel la largeur du film est réduite selon un facteur 7:1 entre les sections d'entrée et de sortie du dispositif.

5. Dispositif selon la revendication 3, en combinaison avec un écraseur (22) pour recevoir le film quand il quitte le dispositif.

Fig.1.

Fig.3.

Fig.17.

EP 0 250 651 B1

Fig.2.

EP 0 250 651 B1

Fig. 4.

Fig. 5.

Fig. 6.

Fig. 7.

Fig. 8.

Fig.9.

Fig.10.

Fig.11.

Fig.12.

Fig.13.

Fig.14.

Fig.16.

Fig.15.